# EUROPÄISCHE PATENTSCHRIFT

(11) **EP 3 013 674 B1**
(45) Veröffentlichungstag und Bekanntmachung des Hinweises auf die Patenterteilung: **06.10.2021**
(21) Anmeldenummer: 14724092.3
(22) Anmeldetag: 15.05.2014
(51) Int. Cl.: B62K 11/00, B62M 7/00, B62D 37/00

(54) **VERFAHREN ZUR QUERDYNAMISCHEN STABILISIERUNG EINES EINSPURIGEN KRAFTFAHRZEUGS**
METHOD FOR THE TRANSVERSE DYNAMIC STABILISATION OF A SINGLE-TRACK MOTOR VEHICLE
PROCÉDÉ PERMETTANT LA STABILISATION DYNAMIQUE TRANSVERSALE D'UN VÉHICULE AUTOMOBILE À DEUX ROUES

(30) Priorität: 28.06.2013 DE 102013212606
(43) Veröffentlichungstag der Anmeldung: 04.05.2016
(73) Patentinhaber: Robert Bosch GmbH, 70442 Stuttgart (DE)
(72) Erfinder: LEMEJDA, Markus, 71642 Ludwigsburg (DE); KLEWS, Matthias, 72076 Tuebingen (DE); WAHL, Anja, 71706 Markgroeningen (DE)
(86) Internationale Anmeldenummer: PCT/EP2014/059988
(87) Internationale Veröffentlichungsnummer: WO 2014/206642

(56) Entgegenhaltungen:
- EP-A2- 1 488 974
- DE-A1-102010 003 951
- US-B1- 7 384 055

## Beschreibung

### Stand der Technik

Eine häufige Ursache von Kurvenunfällen ohne Fremdbeteiligung mit motorisierten Zweirädern stellt ein übermäßiges Über- oder Untersteuern des Fahrzeugs mit seitlichem Ausbrechen eines oder beider Räder dar. Diese Situationen werden hauptsächlich durch überhöhte Kurvengeschwindigkeiten, zu starkes Beschleunigen in Schräglage oder Änderungen des Reibwerts zwischen Reifen und Straße provoziert. Insbesondere im letztgenannten Fall kann ein abfallender und bereits nach einer kurzen Strecke wieder abrupt ansteigender Reibwert zu sogenannten "Highsidern" mit einem Überschlag des Motorrads führen.

Bei zweispurigen Fahrzeugen sind äußerst effektive Fahrdynamikregelungssysteme zur Verhinderung von übermäßigem Über- oder Untersteuern weit verbreitet. Das einseitige Bremsen als typische Eingriffsmöglichkeit in zweispurigen Fahrzeugen kommt bei Zweirädern bzw. Einspurfahrzeugen bauartbedingt nicht in Frage. Lediglich für den oben genannten Fall des zu starken Beschleunigens in Schräglage, was durch das durchrutschende Hinterrad ein Ausbrechen des Hecks zur Folge hat, sind Systeme zur Traktionskontrolle zunehmend verbreitet.

Die amerikanische Patentschrift US 7,384,055 B1 offenbart ein Verfahren zur Verhinderung eines Umkippens eines stehenden Motorrads, bei welchem bei einem Abstellvorgang ein seitlich angebrachtes Luftkissen aufgeblasen wird, um ein Umkippen des stillstehenden Motorrads zu verhindern.

### Offenbarung der Erfindung

Die Erfindung betrifft ein Verfahren zur querdynamischen Stabilisierung eines einspurigen Kraftfahrzeugs während einer Kurvenfahrt,
- bei dem das Vorliegen eines in Fahrzeugquerrichtung instabilen Fahrzustandes detektiert wird und
- abhängig davon zur Stabilisierung des Kraftfahrzeugs wenigstens ein Aktuator, insbesondere eine Düse, angesteuert wird, durch dessen Ansteuerung ein Medium mit einer senkrecht zur Radebene eines Fahrzeugrades gerichteten Geschwindigkeitskomponente austritt.

Durch die Erfindung wird es ermöglicht, gezielt auf ein Rad wirkende Querkräfte zu erzeugen und so zur Stabilisierung des einspurigen Kraftfahrzeugs beizutragen.

Erfindungsgemäß handelt es sich bei dem instabilen Fahrzustand um ein Über- oder Untersteuern des Kraftfahrzeugs.

Eine vorteilhafte Ausgestaltung der Erfindung ist dadurch gekennzeichnet, dass der Schwimmwinkel des Kraftfahrzeugs ermittelt wird und dass ein übersteuernder Fahrzustand dann als vorliegend detektiert wird, wenn der Schwimmwinkel einen vorgegebenen Grenzwert überschreitet.

Erfindungsgemäß ist vorgesehen, dass im Falle eines übersteuernden Fahrzustandes eine an der kurvenäußeren Hinterradaufhängung angebrachte Düse angesteuert wird, durch welche ein Medium in kurvenäußere Richtung austritt.

Eine vorteilhafte Ausgestaltung der Erfindung ist dadurch gekennzeichnet, dass zusätzlich der Lenkwinkel des Kraftfahrzeugs ermittelt wird und dass ein untersteuernder Fahrzustand dann als vorliegend detektiert wird, wenn der Lenkwinkel einen vorgegebenen Grenzwert überschreitet und zugleich der Schwimmwinkel einen vorgegebenen Grenzwert unterschreitet.

Erfindungsgemäß ist vorgesehen, dass im Falle eines untersteuernden Fahrzustandes eine an der kurvenäußeren Vorderradgabel angebrachte Düse angesteuert wird, durch welche ein Medium in kurvenäußere Richtung austritt.

Eine vorteilhafte Ausgestaltung der Erfindung ist dadurch gekennzeichnet, dass es sich bei dem Medium um Kohlendioxid, Stickstoff, Helium oder Druckluft handelt, welches in einem Druckbehälter abgespeichert ist.

Erfindungsgemäß handelt es sich bei dem Medium um ein Verbrennungsprodukt handelt, welches durch eine in Düsennähe realisierte lokale Verbrennung entsteht und durch die Düsenöffnung austritt.

Eine vorteilhafte Ausgestaltung der Erfindung ist dadurch gekennzeichnet, dass das austretende Medium zusätzlich eine in der Radebene liegende, in die nach oben weisende Vertikalrichtung des einspurigen Kraftfahrzeugs weisende Geschwindigkeitskomponente aufweist. Durch die Geschwindigkeitskomponente des austretenden Mediums wird die Anpresskraft des Reifens auf die Fahrbahn erhöht. Dies wirkt sich wiederum erhöhend auf die maximal mögliche Seitenführungskraft des Reifens aus.

Eine vorteilhafte Ausgestaltung der Erfindung ist dadurch gekennzeichnet, dass parallel zur Ansteuerung des Aktuators ein auf das Vorderrad wirkender Lenkmomentdämpfer oder Lenkmomentsteller angesteuert wird. Durch diese Ansteuerung wird ein ungewolltes zusätzliches Lenkmoment kompensiert. Weiter umfasst die Erfindung eine Vorrichtung, enthaltend Mittel, die zur Durchführung der erfindungsgemäßen Verfahren ausgestaltet sind. Dabei handelt es sich um ein Steuergerät, welches mit dem Programmcode zur Durchführung der erfindungsgemäßen Verfahren ausgestattet ist.

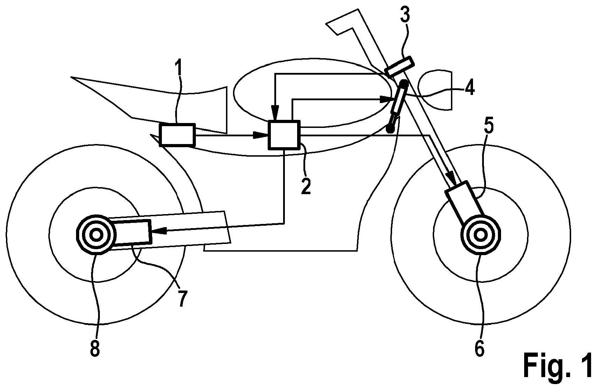

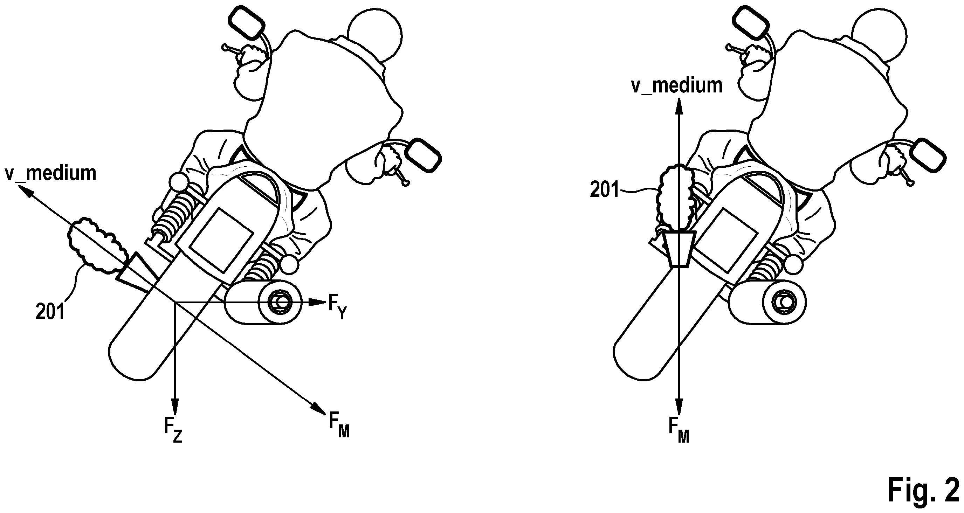

Die Zeichnung umfasst die Figuren 1 und 2.
Fig. 1 zeigt die Seitenansicht eines Motorrads, in welcher die wesentlichsten Komponenten eingezeichnet sind, welche für die Erfindung eine Rolle spielen.
Fig. 2 zeigt die Hinteransicht eines während einer Kurvenfahrt geneigten Motorrads. In der linken Abbildung entweicht ein Medium senkrecht zur Radebene aus einer Düse. In der rechten Abbildung weist das entweichende Medium zusätzlich eine in Vertikalrichtung des Motorrads weisende Geschwindigkeitskomponente auf.

Mit der vorliegenden Erfindung werden Fahrsituationen, bei denen die Räder auszubrechen drohen, mittels Sensoren erkannt, worauf am Motorrad angebrachte Düsen angesteuert werden. Aus diesen Düsen werden Gase ausgestoßen, welche durch den Rückstoß Querkräfte in das Fahrwerk einleiten, so dass das seitliche Ausbrechen von Rädern verhindert wird.

Zur Erkennung von Situationen mit übermäßigem Über- oder Untersteuern wird beispielsweise ein Cluster aus Inertialsensoren sowie ein Lenkwinkelsensor benutzt. Die benötigten Inertialsensoren, welche insbesondere die Drehraten des Motorrads um die drei Raumrichtungen sowie gegebenenfalls zusätzlich die auftretenden Beschleunigungen in die drei Raumrichtungen ermitteln, sind in modernen Motorrädern teilweise bereits verfügbar. Durch am Fahrwerk eingebaute Düsen, deren Öffnungen quer zur Fahrtrichtung weisen, wird eine Möglichkeit geschaffen, mittels einer ausströmenden Stützmasse über das Rückstoßprinzip zusätzliche Querkräfte in das Fahrwerk einzuleiten und damit ein seitliches Ausbrechen der Räder zu verhindern

In einer Ausführungsform ist im Motorrad ein Inertialsensor-Cluster verbaut, der die Querbeschleunigung, Gier-, Roll- und Nickrate messen kann. Die Raddrehzahlen zur Abschätzung der Fahrzeuggeschwindigkeit stehen in nahezu allen Motorrädern ebenfalls als Sensorgröße zur Verfügung. Mit diesen Größen wird dann in einem Steuergerät der Schwimmwinkel abgeschätzt. Der Schwimmwinkel beträgt bei motorisierten Zweirädern bei stabiler Fahrt typischerweise nur wenige Grad. Bei einem sprunghaften Ansteigen des Schwimmwinkels ist von einem Ausbrechen der Hinterachse auszugehen. Wird zusätzlich ein Lenkwinkelsensor benutzt, dann lassen sich auch Untersteuersituationen erkennen, bei denen die Gefahr eines ausbrechenden Vorderrads besteht. Diese Untersteuersituationen zeichnen sich dadurch aus, dass bei größeren Lenkwinkeln der Schwimmwinkel unverhältnismäßig klein ist. Alternativ zum Schwimmwinkel kann bei entsprechend vorhandener Sensorik auch der Schräglaufwinkel der Räder als Regelgröße benutzt werden.

Bei Überschreiten einer festgelegten, eventuell geschwindigkeitsabhängigen Schwimmwinkelgrenze wird das Vorliegen eines kritischen Übersteuerns detektiert. Bei Überschreiten einer festgelegten, eventuell geschwindigkeitsabhängigen Lenkwinkelgrenze bei einem zugleich kleinen Schwimmwinkel wird das Vorliegen eines kritischen Untersteuerns detektiert. Für die Feststellung des Untersteuern kann auch das Verhältnis aus Schwimm- und Lenkwinkel betrachtet werden.

Bei Vorliegen eines der beiden kritischen Zustände werden abhängig von der Differenz des Schwimmwinkels bzw. Lenkwinkels zur jeweiligen Grenze in einem Steuergerät die erforderlichen Kräfte berechnet, um ein seitliches Ausbrechen der Räder zu verhindern. An der Hinterradaufhängung und an der Vordergabel sind jeweils rechts und links von den Radachsen Düsen angebracht, deren Austrittsöffnungen entlang der Radachsen verlaufen. Diese Düsen werden entsprechend der berechneten erforderlichen Kraft angesteuert. Je größer die erforderliche Kraft ist, desto größer ist auch der Massenfluss des aus den Düsenöffnungen austretenden Mediums. Man erhält bei angenommener konstanter Austrittsgeschwindigkeit des austretenden Mediums v_medium für den vom Steuergerät berechneten Kraftverlauf F(t) den Kraftstoß Δp = ∫F(t)dt = v_medium· Δm in Querrichtung zu den Radachsen, wobei Δm die durch die Düsenöffnungen ausgetretene Masse kennzeichnet. Durch diese Maßnahme wird dem übermäßigen Unter- bzw. Übersteuern entgegengewirkt. Nimmt der Schwimmwinkel für den Fall des Übersteuerns bzw. das Verhältnis aus Schwimm- und Lenkwinkel für den Fall des Untersteuerns wieder unkritische Werte an, dann wird die Aktivität der Düsen wieder eingestellt.

Für die Versorgung der Düsen mit Stützmasse bieten sich austretende Gase aus im Motorrad verbauten Druckluftflaschen an, welche z.B. mit Kohlendioxid, Stickstoff, Helium oder Druckluft befüllt sind. Eine alternative Möglichkeit ist die Verbrennung von Brenn- bzw. Kraftstoffen, deren Verbrennungsprodukte mit hohem Druck gemäß dem Raketenprinzip durch die Düsen entströmen. Dafür müssen zusätzliche Treibstoffbehälter und Zündvorrichtungen verbaut werden. Um ein ungewolltes Verdrehen der Gabel beim abrupten Einsetzen der Düsenaktivität an der Vorderachse zu vermeiden, kann ein Lenkungsdämpfer oder Lenkmomentsteller an der Gabel verbaut werden. Durch diese Komponenten kann das ungewollte zusätzliche Lenkmoment kompensiert werden.

In einer Ausgestaltung der Erfindung werden bei einem kritischen Über- oder Untersteuern im Bereich des Radaufhängungen angebrachte Kaltgasgeneratoren aktiviert. Aufgrund des Rückstoßes der ausströmenden Gase wirken Querkräfte auf das Fahrwerk, welche den Mangel an Seitenführungskräften der Reifen kompensieren, so dass das seitliche Ausbrechen von Rädern verhindert wird.

An der Hinterradaufhängung und ggf. auch an der Vordergabel ist jeweils links und rechts von den Radachsen mindestens ein Kaltgasgenerator angebracht, dessen Austrittsöffnungen parallel zu den Radachsen sind. Die Ventile für den Massenstrom durch die Austrittsöffnungen werden entsprechend der ermittelten erforderlichen Kraft angesteuert. Typischerweise lassen sich die Ventile bekannter Kaltgasgeneratoren nur komplett öffnen oder schließen. Diese Öffnungs- und Schließvorgänge können jedoch auch in Abständen von Millisekunden erfolgen. Weiterhin wird die Kraft des ausströmenden Gases bei geöffneten Ventilen aufgrund des nachlassenden Innendrucks des Gasbehälters stetig abnehmen. Daher ist es vorteilhaft, wenn der Kraftstoß Δp = ∫F(t)dt = v_medium· Δm durch eine Impulsfolge realisiert wird, wobei der einzelne Impuls aus einem Öffnen des Ventils und einem rasch anschließenden Schließvorgang besteht. Diese seitlichen Kraftstöße durch die Kaltgasgeneratoren stellen keine nennenswerte zusätzliche Belastung für das Fahrwerk dar, da im Prinzip lediglich eine eventuell zu geringe Seitenführungskraft der Reifen ausgeglichen wird.

Um die Umgebung durch das abrupte Austreten von Gasen mit hohem Druck weniger zu gefährden, könne die Austrittsöffnungen mit einer möglichst breit auffächernden Abstrahlcharakteristik gestaltet werden, so dass der Druck mit zunehmender Entfernung von den Öffnungen rasch abnimmt. Es ist auch denkbar, dass die Austrittsöffnungen nicht parallel zur Radebene, sondern nach oben gedreht angebracht sind. Da das Öffnen typischerweise bei Kurvenfahrten, d.h. bei deutlicher Schräglage, erfolgt, weist die Öffnung der Austrittsdüse dann während des Ausströmen des Gases wenigstens zum Teil nach oben. Durch eine derartige Anbringung der Austrittsdüsen nimmt die gewünschte Lateralkomponente der Kraft zwar ab, dafür wird aber der Anpressdruck am Radaufstandspunkt erhöht, was einem seitlichen Driften des Rades ebenfalls entgegenwirkt.

In Fig. 1 ist die Seitenansicht eines Motorrads dargestellt. Dabei kennzeichnet 1 eine im oder am Motorrad verbaute Inertialsensorik. 2 kennzeichnet ein Steuergerät, in welchem beispielsweise die Algorithmen zur Situationserkennung sowie zur Berechnung der Düseneingriffe sowie zur Lenkungsstabilisierung ablaufen. 3 kennzeichnet einen Lenkwinkelsensor und 4 einen aktiven Lenkungsdämpfer oder Lenkmomentsteller. 5 kennzeichnet einen Massenspeicher sowie die Aktuatorik für die Düsenansteuerung am Vorderrad, 6 kennzeichnet eine der Düsen am Vorderrad. Am Hinterrad kennzeichnet 7 einen Massenspeicher sowie die Aktuatorik für die Düsenansteuerung. 8 kennzeichnet eine der Düsen am Hinterrad.

In Fig. 2 ist in der linken und rechten Abbildung jeweils die Rückansicht eines Motorrads in Schräglage während einer Kurvenfahrt dargestellt. Dabei ist zusätzlich die Ausströmrichtung 201 des mit der Geschwindigkeit v_medium ausströmenden Gases eingezeichnet. In der linken Abbildung von Fig. 2 strömt das Gas senkrecht zur Radebene des Hinterrades aus und erzeugt die auf das Hinterrad wirkende Rückstoßkraft Fm. Diese weist eine in der Fahrbahnebene, in Richtung der Kurveninnenseite gerichtete Komponente Fy sowie eine senkrecht zur Fahrbahnoberfläche gerichtete, den Anpressdruck des Reifens auf die Fahrbahn erhöhende Komponente Fz auf. In der rechten Abbildung von Fig. 2 strömt das Gas nicht senkrecht zur Radebene des Hinterrades aus der Düse, sondern weist eine relativ große parallel zur Radebene gerichtete Geschwindigkeitskomponente auf. Im dargestellten Beispiel von Fig. 2 führt das dazu, dass das Gas wegen der Neigung des Motorrads senkrecht nach oben entströmt. Die Rückstoßkraft Fm wirkt deshalb ebenfalls senkrecht von oben und erhöht den Anpressdruck des Reifens stark an die Fahrbahnoberfläche.

## Patentansprüche

1. Verfahren zur querdynamischen Stabilisierung eines Motorrads während einer Kurvenfahrt,
- bei dem das Vorliegen eines in Fahrzeugquerrichtung instabilen Fahrzustandes, bei dem es sich um ein Über- oder Untersteuerns des Motorrads handelt und bei welchem die Räder auszubrechen drohen, detektiert wird und
- abhängig davon zur Stabilisierung des Motorrads wenigstens eine Düse (6, 8) angesteuert wird, durch deren Ansteuerung ein Mediummit einer Geschwindigkeitskomponente (v_medium) senkrecht zur Radebene eines Fahrzeugrades austritt, wobei
- es sich bei dem Medium um ein Gas aus einer im Motorrad verbauten Druckluftflasche oder ein Verbrennungsprodukt aus einer in Düsennähe realisierten lokalen Verbrennung handelt, wobei
- im Falle eines übersteuernden Fahrzustandes eine an der kurvenäußeren Hinterradaufhängung angebrachte Düse (8) angesteuert wird, durch welche das Medium mit einer in kurvenäußere Richtung weisenden Geschwindigkeitskomponente (v_medium) austritt, oder wobei
- im Falle eines untersteuernden Fahrzustandes eine an der kurvenäußeren Vorderradgabel angebrachte Düse (6) angesteuert wird, durch welche das Medium mit einer in kurvenäußere Richtung weisenden Geschwindigkeitskomponente (v_medium) austritt.

2. Verfahren nach Anspruch 1, **dadurch gekennzeichnet, dass** der Schwimmwinkel des Motorrads ermittelt wird und dass der übersteuernde Fahrzustand dann als vorliegend detektiert wird, wenn der Schwimmwinkel einen vorgegebenen Grenzwert überschreitet.

3. Verfahren nach Anspruch 2, **dadurch gekennzeichnet, dass** zusätzlich der Lenkwinkel des Motorrads ermittelt wird und dass der untersteuernde Fahrzustand dann als vorliegend detektiert wird, wenn der Lenkwinkel einen vorgegebenen Grenzwert überschreitet und zugleich der Schwimmwinkel einen vorgegebenen Grenzwert unterschreitet.

4. Verfahren nach Anspruch 1, **dadurch gekennzeichnet, dass** es sich bei dem Medium um Kohlendioxid, Stickstoff, Helium oder Druckluft handelt, welches in einem Druckbehälter abgespeichert ist.

5. Verfahren nach Anspruch 1, **dadurch gekennzeichnet, dass** das austretende Medium zusätzlich eine parallel zur Radebene gerichtete, in die nach oben gerichtete Vertikalrichtung des Motorrads weisende Geschwindigkeitskomponente (v_medium) aufweist.

6. Verfahren nach Anspruch 1, **dadurch gekennzeichnet, dass** parallel zur Ansteuerung des Aktuators ein auf das Vorderrad wirkender Lenkmomentdämpfer oder Lenkmomentsteller (3) angesteuert wird.

7. Verfahren nach Anspruch 1, **dadurch gekennzeichnet, dass** das Medium in die Umgebung des Motorrads austritt.

8. Steuergerät (2) aufweisend einen Programmcode zur Durchführung des Verfahrens nach einem der Ansprüche 1 bis 7.

## Claims

1. Method for the lateral-dynamic stabilization of a motorcycle while riding around bends,
- in the case of which method the presence of a riding state which is unstable in the vehicle transverse direction is detected, which riding state is oversteering or understeering of the motorcycle and in the case of which riding state the wheels threaten to break away, and
- at least one nozzle (6, 8) is actuated depending on this in order to stabilize the motorcycle, by way of the actuation of which at least one nozzle (6, 8) a medium exits with a speed component (v_medium) perpendicularly with respect to the wheel plane of a vehicle wheel,
- the medium being a gas from a compressed air cylinder which is installed in the motorcycle or a combustion product from a local combustion which is realised in the vicinity of the nozzle,
- in the case of an oversteering riding state, a nozzle (8) which is attached to the rear wheel suspension system on the outside of the bend being actuated, by way of which nozzle (8) the medium exits with a speed component (v_medium) which points in the direction of the outside of the bend, or
- in the case of an understeering riding state, a nozzle (6) which is attached to the front wheel fork on the outside of the bend being actuated, by way of which nozzle (6) the medium exits with a speed component (vmedium) which points in the direction of the outside of the bend.

2. Method according to Claim 1, **characterized in that** the slip angle of the motorcycle is determined, and **in that** the oversteering riding state is detected as being present when the slip angle exceeds a predefined limit value.

3. Method according to Claim 2, **characterized in that**, in addition, the steering angle of the motorcycle is determined, and **in that** the understeering riding state is detected as being present when the steering angle exceeds a predefined limit value and at the same time the slip angle undershoots a predefined limit value.

4. Method according to Claim 1, **characterized in that** the medium is carbon dioxide, nitrogen, helium or compressed air which is stored in a pressure vessel.

5. Method according to Claim 1, **characterized in that** the exiting medium additionally has a speed component (v_medium) which is directed parallel to the wheel plane and points in the upwardly directed vertical direction of the motorcycle.

6. Method according to Claim 1, **characterized in that** a steering torque damper or steering torque actuator (3) which acts on the front wheel is actuated in parallel with the actuation of the actuator.

7. Method according to Claim 1, **characterized in that** the medium exits into the surroundings of the motorcycle.

8. Control unit (2) having a program code for carrying out the method according to one of Claims 1 to 7.

## Revendications

1. Procédé de stabilisation dynamique transversale d'une moto dans un virage, procédé dans lequel
- la présence d'un état de conduite instable est détectée dans la direction transversale du véhicule, état qui est un survirage ou un sous-virage de la moto et dans lequel les roues menacent de se détacher, et
- au moins une buse (6, 8) est conséquemment commandée pour stabiliser la moto, laquelle commande de délivrer un milieu avec une composante de vitesse (v_medium) perpendiculaire au plan d'une roue de véhicule,
- le milieu étant un gaz provenant d'une bouteille d'air comprimé installée dans la moto ou un produit de combustion provenant d'une combustion locale effectuée à proximité de la buse,
- dans le cas d'un état de conduite en survirage, une buse (8) fixée à la suspension de roue arrière à l'extérieur du virage étant commandée, laquelle permet de délivrer le milieu avec une composante de vitesse (v_medium) dirigée vers l'extérieur du virage, ou
- dans le cas d'un état de conduite en sous-virage, une buse (6) fixée à la fourche de la roue avant à l'extérieur du virage est commandée, laquelle permet de délivrer le milieu avec une composante de vitesse (v_medium) dirigée vers l'extérieur du virage.

2. Procédé selon la revendication 1, **caractérisé en ce que** l'angle de flottement de la moto est déterminé et **en ce que** l'état de conduite en survirage est détecté comme présent lorsque l'angle de flottement est supérieur à une valeur limite spécifiée.

3. Procédé selon la revendication 2, **caractérisé en ce que** l'angle de braquage de la moto est en outre déterminé et **en ce que** l'état de conduite en sous-virage est détecté comme présent lorsque l'angle de braquage est supérieur à une valeur limite spécifiée et en même temps l'angle de flottement est inférieur à une valeur limite spécifiée.

4. Procédé selon la revendication 1, **caractérisé en ce que** le milieu est du dioxyde de carbone, de l'azote, de l'hélium ou de l'air comprimé, qui est stocké dans un récipient sous pression.

5. Procédé selon la revendication 1, **caractérisé en ce que** le milieu délivré a en outre une composante de vitesse (v_medium) orientée parallèlement au plan de la roue et dirigée dans la direction verticale, orientée vers le haut, de la moto.

6. Procédé selon la revendication 1, **caractérisé en ce qu'**un amortisseur de couple de direction ou une plaque de couple de direction (3) agissant sur la roue avant est commandée parallèlement à la commande de l'actionneur.

7. Procédé selon la revendication 1, **caractérisé en ce que** le milieu débouche dans l'environnement de la moto.

8. Unité de commande (2) comportant un code de programme destiné à la mise en œuvre du procédé selon l'une des revendications 1 à 7.
